(19) Europäisches Patentamt
European Patent Office
Office européen des brevets

(11) **EP 4 029 075 B1**

(12) **FASCICULE DE BREVET EUROPEEN**

(45) Date de publication et mention de la délivrance du brevet:
**01.11.2023 Bulletin 2023/44**

(21) Numéro de dépôt: **20765287.6**

(22) Date de dépôt: **04.09.2020**

(51) Classification Internationale des Brevets (IPC):
**H01M 10/44** *(2006.01)* **H02J 7/00** *(2006.01)*

(52) Classification Coopérative des Brevets (CPC):
**H01M 10/443; H01M 10/448; H02J 7/00714; H02J 7/007182; H02J 7/007194;** H01M 10/0525; Y02E 60/10

(86) Numéro de dépôt international:
**PCT/EP2020/074853**

(87) Numéro de publication internationale:
**WO 2021/048031 (18.03.2021 Gazette 2021/11)**

(54) **PROCÉDÉ ET SYSTÈME DE GESTION D'UN ÉLÉMENT DE STOCKAGE D'ÉNERGIE ÉLECTRIQUE**

VERFAHREN UND SYSTEM ZUR VERWALTUNG EINES SPEICHERELEMENTS FÜR ELEKTRISCHE ENERGIE

METHOD AND SYSTEM FOR MANAGING AN ELECTRICAL ENERGY STORAGE ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.09.2019 FR 1909891**

(43) Date de publication de la demande:
**20.07.2022 Bulletin 2022/29**

(73) Titulaire: **Commissariat à l'Energie Atomique et aux Energies Alternatives**
**75015 Paris (FR)**

(72) Inventeurs:
• **TESSARD, Romain**
**38054 GRENOBLE cedex 09 (FR)**
• **KLEIN, Jean-Marie**
**38054 GRENOBLE cedex 09 (FR)**

(74) Mandataire: **INNOV-GROUP**
**310, avenue Berthelot**
**69372 Lyon Cedex 08 (FR)**

(56) Documents cités:
**EP-A2- 2 690 744 US-A1- 2011 199 059**
**US-A1- 2013 257 382**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique de l'invention**

La présente invention se rapporte à un procédé et à un système de gestion d'un élément de stockage d'énergie électrique de type métal-ion, par exemple de type Lithium-ion.

**Etat de la technique**

A l'état neuf, une cellule classique de type métal-ion doit être utilisée entre, par exemple, une valeur maximale de tension Vmax=4,2V et une valeur minimale de tension Vmin=2,7V. Au-delà de ces deux seuils, la cellule se trouve être respectivement surchargée ou sous-déchargée.

Cependant, lors de son utilisation ou de son stockage, une cellule est amenée à se dégrader. La dégradation d'une cellule peut être caractérisée par son état de santé, appelé classiquement SoH (Pour "State of Health"). L'état de santé d'une cellule correspond au rapport de sa capacité réelle (exprimée en Ah) à un état de vieillissement donné par rapport à sa capacité nominale (exprimée également en Ah). En début de vie, le SoH d'une cellule est théoriquement de 100 %.

A partir d'un certain niveau de vieillissement d'une cellule, des phénomènes fortement exothermiques apparaissent. Pour les éviter, l'unité centrale associée à l'élément de stockage (unité centrale appelée BMS pour "Battery Management System") peut s'appuyer sur l'évolution de l'état de santé des cellules pour adapter les courants de charge et de décharge à la quantité d'énergie qui reste disponible. Cependant, cette limitation n'aura pas d'influence sur les potentiels des deux électrodes de l'élément de stockage, uniquement sur les régimes subis.

Il existe donc un besoin d'améliorer la durée de vie d'un élément de stockage d'énergie électrique à une ou plusieurs cellules, en adaptant la tension maximale de charge et la tension seuil de coupure en fin de décharge, à l'état réel des électrodes. Cette adaptation à l'état réel des électrodes aura notamment l'avantage d'améliorer la durée de vie de l'élément de stockage, mais aussi de limiter les risques de rupture ainsi que la génération de chaleur.

La demande de brevet US2013/257382A1 décrit une solution qui permet d'adapter la tension maximale de charge et de seuil de coupure en fin de décharge d'une batterie.

Cependant, cette solution ne permet pas de tenir compte de l'évolution de l'état de santé de la batterie au cours du temps.

Le but de l'invention est de proposer une solution qui permet une adaptation de la tension maximale de charge de l'élément de stockage d'énergie électrique et de la tension seuil de coupure en fin de décharge, tout en tenant compte de l'évolution de l'état de santé de l'élément de stockage d'énergie électrique au cours du temps.

**Exposé de l'invention**

Ce but est atteint par un procédé de gestion d'un élément de stockage d'énergie électrique de type métal-ion qui comporte au moins une cellule, caractérisé en ce que lors d'un cycle de charge à tension constante, le procédé comporte les étapes suivantes :

- Mesure de la température de la cellule pour obtenir plusieurs valeurs de température,
- Détermination d'une valeur maximale de température parmi les valeurs de température obtenues,
- En cas de détection d'un échauffement supérieur à un seuil d'échauffement ou d'un dépassement de seuil de ladite valeur maximale de température, correction d'une valeur seuil haute de tension de charge de la cellule et d'une valeur seuil basse de tension de fin de décharge de la cellule.
- Détermination d'une première valeur de correction à appliquer à la valeur seuil haute de tension et d'une deuxième valeur de correction à appliquer à la valeur basse de tension, la première valeur de correction étant déterminée à partir de la somme d'un pas de correction et d'une valeur de correction mémorisée lors du cycle de charge précédent.

Selon une première réalisation particulière, l'étape de détection d'un échauffement supérieur à un seuil d'échauffement est mise en oeuvre par détermination de la différence entre ladite valeur maximale de température déterminée et une valeur initiale de température mesurée au début du cycle de charge et par comparaison de ladite différence par rapport audit seuil d'échauffement.

Selon une particularité de cette première réalisation, ledit seuil d'échauffement correspond à la différence entre une valeur de température pré-mémorisée et ladite valeur initiale de température.

Selon une deuxième réalisation particulière, l'étape de détection du dépassement d'un seuil de ladite valeur maximale de température est mise en oeuvre par comparaison de ladite valeur maximale de température avec une valeur seuil de température.

Selon une particularité de cette deuxième réalisation particulière, le procédé comporte une étape de correction dudit pas de correction lorsque la différence entre la valeur maximale de température mesurée lors d'un cycle de charge et la valeur maximale de température mesurée lors d'un cycle de charge précédent est supérieure à un seuil.

L'invention concerne également un système de gestion d'une batterie de type métal-ion comprenant au moins une cellule, ledit système comportant :

- Des moyens de mesure de la température de chaque cellule,
- Une unité de traitement et de commande configurée pour recevoir les données de température en provenance des moyens de mesure de la température et comprenant :

  ◦ Des moyens de détermination d'une valeur maximale de température parmi les valeurs de température obtenues,
  ◦ Des moyens de détection d'un échauffement supérieur à un seuil d'échauffement ou d'un dépassement de seuil de ladite valeur maximale de température et,
  ◦ Des moyens de correction d'une valeur seuil haute de tension de charge de la cellule et d'une valeur seuil basse de tension de fin de décharge de la cellule lors d'un dépassement dudit seuil d'échauffement ou de ladite valeur maximale de température.
  ◦ Des moyens de détermination d'une première valeur de correction à appliquer à la valeur seuil haute de tension et d'une deuxième valeur de correction à appliquer à la valeur seuil basse de tension, la première valeur de correction étant déterminée à partir de la somme d'un pas de correction et d'une valeur de correction mémorisée lors du cycle de charge précédent.

Selon une première réalisation particulière, les moyens de détection d'un échauffement supérieur à un seuil d'échauffement comportent des moyens de détermination de la différence entre ladite valeur maximale de température déterminée et une valeur initiale de température mesurée au début du cycle de charge et des moyens de comparaison de ladite différence par rapport audit seuil d'échauffement.

Selon une particularité de cette première réalisation, ledit seuil d'échauffement correspond à la différence entre une valeur de température pré-mémorisée et ladite valeur initiale de température.

Selon une deuxième réalisation particulière, les moyens de détection du dépassement d'un seuil de ladite valeur maximale de température comportent des moyens de comparaison de ladite valeur maximale de température avec une valeur seuil de température.

Selon une particularité de cette deuxième réalisation particulière, l'unité de traitement comporte des moyens de correction dudit pas de correction lorsque la différence entre la valeur maximale de température mesurée lors d'un cycle de charge et la valeur maximale de température mesurée lors d'un cycle de charge précédent est supérieure à un seuil.

### Brève description des figures

D'autres caractéristiques et avantages vont apparaître dans la description détaillée qui suit faite en regard des dessins annexés dans lesquels :

- La figure 1 représente de manière schématique l'architecture d'une cellule électrochimique, par exemple de type lithium-ion et illustre le principe de l'invention.
- Les figures 2 et 3 représentent deux algorithmes pouvant être mis en oeuvre dans le cadre de l'invention.
- La figure 4 montre plusieurs courbes permettant d'illustrer le principe de l'invention.

### Description détaillée d'au moins un mode de réalisation

L'invention s'adresse à la gestion d'un élément de stockage d'énergie électrique. Cet élément de stockage d'énergie électrique peut comporter une ou plusieurs cellules électrochimiques.

Chaque cellule est de type métal-ion, par exemple de type Lithium-ion. Les batteries Lithium-ion présentent une grande capacité de stockage dans un faible volume et avec un faible poids. On trouve différentes sortes de batteries de type Lithium-ion. Il existe notamment les batteries de type LCO (lithium cobalt), de type LMO (lithium manganèse), ou de type NMC (nickel manganèse cobalt).

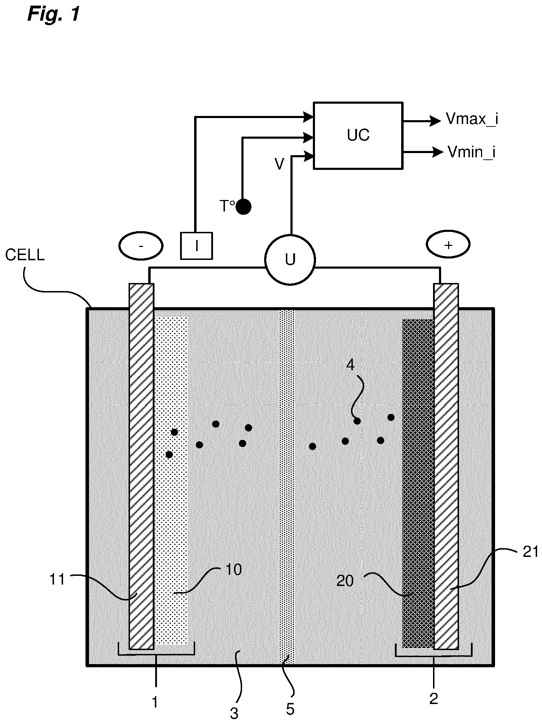

En référence à la figure 1, une cellule électrochimique CELL comporte deux électrodes 1, 2, contenant chacune un matériau actif 10, 20 et un collecteur de courant 11, 21 permettant le raccordement au circuit électrique externe. Les électrodes baignent dans un électrolyte 3 qui permet le transport de charges 4 sous forme ionique, nécessaire au fonctionnement des réactions de type redox. Un séparateur 5 joue un rôle d'isolation électrique des électrodes. Il doit empêcher un transfert d'électrons (énergie électrique) en interne mais permettre un transfert d'ions (énergie électrochimique).

Dans l'invention, la gestion de l'élément de stockage est confiée à un système dédié comportant une unité de traitement UC mettant en oeuvre le procédé de gestion de l'invention. Il pourra notamment s'agir d'un système de type BMS ("Battery Management System") classiquement employé pour la gestion d'une batterie.

Le principe de gestion de l'invention consiste à permettre d'adapter les seuils de tension maximale et minimale de l'élément de stockage pour tenir compte des variations de température subies, de son état de vieillissement, des régimes de charge/décharge appliqués.

Pour cela, la gestion repose principalement sur la surveillance de la température de chaque cellule de l'élément de stockage, afin de recaler les seuils de tension si la température dépasse un seuil ou si un échauffement anormal est détecté.

La méthode consiste à recaler les seuils de tension par la détermination de seuils d'énergie thermique lors de la phase de charge de l'élément de stockage à tension constante (dite phase CV pour "Constant Voltage").

En plus de l'unité de traitement UC, le système comporte des moyens de mesure de la température (T°) au niveau de chaque cellule, des moyens U de mesure de la tension aux bornes de chaque cellule et des moyens de mesure du courant I délivré par chaque cellule.

Les seuils de tension initiaux sont en règle générale spécifiés par le fabricant. Pour une cellule de type NMC, on a par exemple :

$$Vmin\_init=2.5V$$

$$Vmax\_init=4.2V$$

L'objectif de l'invention est de pouvoir adapter ces deux seuils en leur appliquant chacun une valeur de correction lorsque des variations de température sont détectées.

Pour le seuil de tension haute, on retranche une première valeur de correction afin d'abaisser le seuil et pour le seuil de tension bas, on ajoute une deuxième valeur de correction pour remonter le seuil.

Selon une particularité de l'invention, la première valeur de correction et la deuxième valeur de correction ne sont pas choisies fixes et vont évoluer au cours du temps, au fur et à mesure des cycles de charge subis par les cellules.

Les deux valeurs de correction $A_i$, $B_i$ peuvent s'exprimer par les deux relations ci-dessous :

$$A_i = A_{i-1} + \alpha_i$$

$$B_i = A_i/2$$

Dans lesquelles :

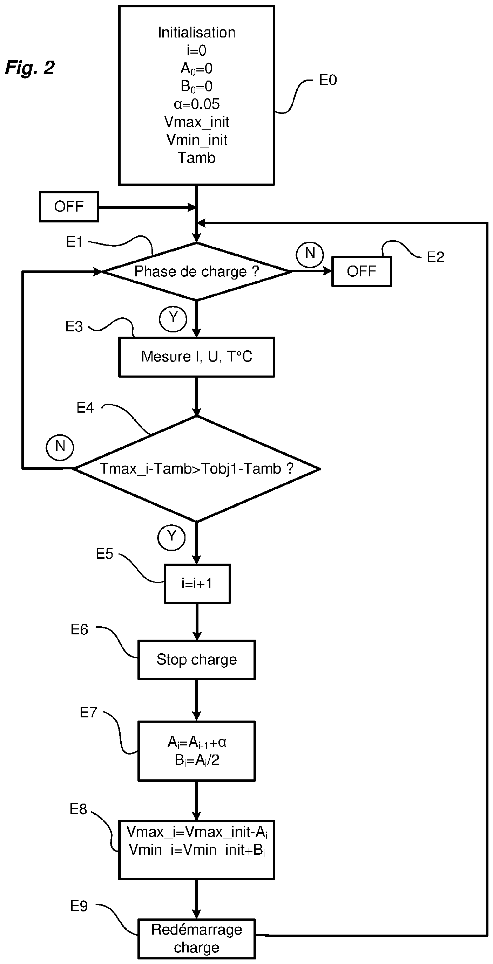

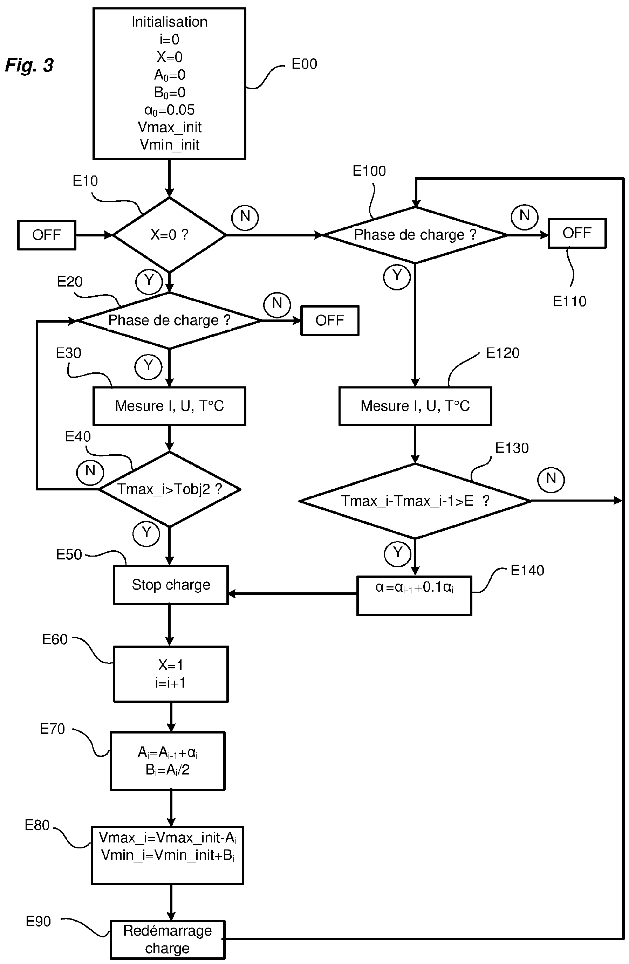

- i peut aller de 0 à N et est incrémenté d'une unité à chaque nouvelle modification des seuils ;
- $\alpha_i$ peut être choisie fixe (voir algorithme de la figure 2) ou variable (algorithme de la figure 3), sa valeur pouvant alors être modifiée après chaque nouvelle modification des seuils ;

A l'état initial ou lorsque sa valeur est fixe, $\alpha_i$ aura sa valeur fixée en fonction de la température ambiante initiale des cellules et des régimes de charge. A titre d'exemple, à 25°C et 0,5C, on aura $\alpha_i=0.05$ et à 10°C et 1C, on aura $\alpha_i=0.1$

$\alpha_i$ correspond donc au pas de correction appliqué directement à la première valeur de correction $A_i$. Le deuxième algorithme qui sera décrit ci-dessous propose de réadapter la valeur de $\alpha_i$ pour affiner la valeur de correction et donc le seuil et ainsi permettre d'augmenter la durée de vie de l'élément de stockage.

Partant de ces considérations, deux algorithmes sont décrits ci-dessous, en liaison avec les figures 2 et 3. Dans ces deux algorithmes, la lettre Y correspond à la branche "Oui" et la lettre N correspond à la branche "Non".

Sur la figure 2, le procédé de gestion suit les étapes suivantes :

**E0** : Il s'agit d'une étape d'initialisation.

L'indice i de modification des seuils est fixé à 0.

On a aussi $A_i=0$ et $B_i=0$

$\alpha_i$ qui est constant et qui est égal à $\alpha=0.05$

Vmax_init correspond au seuil haut de tension au-dessus duquel l'élément de stockage ne doit pas être chargé ;
Vmin_init correspond au seuil bas de tension au-dessous duquel l'élément de stockage ne doit pas être déchargé ;
Tamb correspond à la température ambiante mesurée au niveau de l'élément de stockage, au début de la charge, sur son enveloppe externe.

**E1** : Il s'agit d'une étape de test durant laquelle l'unité de traitement UC teste si l'élément de stockage est bien en phase de charge.

**E2** : Si l'élément de stockage n'est pas en phase de charge, alors l'unité de traitement UC ne peut appliquer l'algorithme et recommencera ultérieurement.

**E3** : Si l'élément de stockage est en phase de charge, l'unité de traitement UC commande les moyens de mesure de courant I, de tension U et de température T° et récupère les données de mesure correspondantes sur une période de mesure déterminée (choisie fixe) de la phase de charge.

**E4** : A partir des données de températures recueillies sur la période de mesure et en se focalisant sur la phase à tension constante (CV), l'unité de traitement UC détermine la valeur maximale Tmax_i de température. Puis l'unité de traitement UC compare l'échauffement maximal subi par rapport à un seuil d'échauffement considéré comme acceptable. Elle effectue ainsi le test suivant :

$$\text{Tmax\_i-Tamb>Tobj1-Tamb}$$

Dans lequel :
Tmax_i correspond à la valeur maximale de température recueillie sur la période de mesure.

Tamb correspond à la température ambiante mesurée au début de la charge.

Tobj1 correspond à la valeur seuil de température au-dessus de laquelle l'élément de stockage peut subir des dégradations et subir des réactions parasites.

**E5** : Si un échauffement anormal est constaté (branche Y), l'unité de traitement UC effectue une modification des seuils. A chaque nouvelle modification, elle incrémente i d'une unité.

Si l'échauffement constaté est normal (branche N), l'unité de traitement retourne à l'étape E1.

**E6** : Lors de la modification des seuils, l'unité de traitement stoppe la charge en cours.

**E7** : L'unité de traitement UC détermine les nouvelles valeurs de corrections en appliquant les relations :

$$A_i=A_{i-1}+\alpha_i$$

$$B_i=A_i/2$$

**E8** : L'unité de traitement UC recale ensuite les deux seuils de tension en appliquant les relations suivantes :

$$\text{Vmax\_i=Vmax\_init-}A_i$$

$$\text{Vmin\_i=Vmin\_init+}B_i$$

**E9** : Une fois les seuils recalés, l'unité de traitement UC redémarre la charge et recommence l'algorithme à l'étape E1

Une autre méthode de compensation linéaire peut être mise en place, comme représenté sur la figure 3. Dans ce deuxième algorithme, la température objectif référencée Tobj2 peut être définie au plus près de l'échauffement naturel en charge, pour une quantité de charge donnée (définie en fonction de l'état de charge SoC de départ), de la température Tamb et du régime de charge. Tout échauffement complémentaire est alors principalement dû à l'augmentation de la résistance interne de la cellule et donc à son vieillissement (à Tamb et régime constant). Ainsi, le pas de correction $\alpha_i$ pourra être adapté à une valeur beaucoup plus faible, par exemple de 0,01 à 0,001 , idéalement entre 0,003 et 0,005. Cette discrétisation provoquera une adaptation par pas, qui sera linéarisée sur l'évolution des cycles suivants. Un algorithme d'état de santé, voire de maintenance prédictive, pourra être calé sur une valeur du coefficient $A_i$ ou sur un nombre d'itérations de l'adaptation des seuils : si l'énergie/la capacité chargée diminue de telle façon que le service ne peut être rendu dans toutes les conditions d'utilisations de l'application, alors le produit est en fin de vie, ou doit être maintenu (remplacement de l'élément électrochimique).

Le deuxième algorithme présenté sur la figure 3 suit ainsi les étapes suivantes. **E00** : Il s'agit d'une étape d'initialisation.

L'indice i de modification des seuils est fixé à 0.

On a aussi :

$$A_i=0$$

$$B_i=0$$

$\alpha_i$ qui n'est ici pas constant et qui vaut initialement $\alpha_i=0.005$

Vmax_init correspond au seuil haut de tension au-dessus duquel l'élément de stockage ne doit pas être chargé ;

Vmin_init correspond au seuil bas de tension au-dessous duquel l'élément de stockage ne doit pas être déchargé ;

Tamb correspond à la température ambiante au niveau de l'élément de stockage, mesurée au début de la charge sur l'enveloppe de l'élément de stockage.

X=0. On verra que le paramètre X (égal à 0 ou 1) correspond à un compteur permettant à l'unité de traitement UC de ne pas réitérer le test principal sur la température lorsqu'un dépassement du seuil de température a déjà été constaté une première fois.

**E10** : A cette étape, l'unité de traitement UC effectue un test pour savoir si X=0 ou non. Si X n'est pas égal à 0, l'unité de traitement UC bascule automatiquement dans la boucle d'adaptation du coefficient de correction $\alpha_i$.

**E20** : Si X est égal à 0, ce qui est forcément le cas lorsque l'élément est neuf, l'unité de traitement UC teste si l'élément de stockage est bien en phase de charge.

**E30** : Si l'élément de stockage est en phase de charge, l'unité de traitement UC commande les moyens de mesure de courant I, de tension U et de température T° et récupère les données de mesure correspondantes sur une période de mesure déterminée (choisie fixe) au cours de la charge.

**E40** : A partir des données de température recueillies sur la période de mesure et en se focalisant sur la phase à tension constante (CV), l'unité de traitement UC détermine la valeur maximale de température.

Puis l'unité de traitement compare cette valeur maximale à une valeur seuil de température (Tobj2), que l'élément de stockage ne doit pas dépasser.

Si le seuil de température n'est pas dépassé, l'unité de traitement retourne à l'étape E20 et peut recommencer une étape de mesure lors d'une phase de charge.

Si le seuil de température est dépassé, l'unité de traitement UC bascule dans la partie de correction des seuils.

**E50** : L'unité de traitement UC stoppe la charge pour calage des nouveaux seuils de tension.

**E60** : L'unité de traitement UC passe la valeur de X à 1 et incrémente la valeur de i d'une unité.

**E70** : L'unité de traitement UC détermine les nouvelles valeurs de corrections en appliquant les relations :

$$A_i=A_{i-1}+\alpha_i$$

$$B_i=A_i/2$$

**E80** : L'unité de traitement UC recale les deux seuils de tension en appliquant les relations suivantes :

$$Vmax\_i=Vmax\_init-A_i$$

$$Vmin\_i=Vmin\_init+B_i$$

**E90** : Une fois les seuils recalés, l'unité de traitement UC redémarre la charge et bascule automatiquement dans une boucle de réglage du coefficient $\alpha_i$ en fonction de la température.

**E100** : L'unité de traitement UC détermine si l'élément de stockage est en phase de charge.

**E110** : Si l'élément de stockage n'est pas en phase de charge, l'unité de traitement UC sort de l'algorithme et recommencera ultérieurement.

**E120** : Si l'élément de stockage est en phase de charge, l'unité de traitement UC commande les moyens de mesure de courant I, de tension V et de température T° et récupère les données de mesure correspondantes sur une période de mesure déterminée (choisie fixe).

**E130** : A partir des données de températures recueillies sur la période de mesure et en se focalisant sur la phase à tension constante (CV), l'unité de traitement UC détermine la valeur maximale de température Tmax_i.

Puis l'unité de traitement UC détermine si la différence entre cette température Tmax_i et la température Tmax_i-1 de l'itération précédente est supérieure à un seuil défini E de température. La valeur de E est choisie très faible. Pour la considérer mesurable et inférieure à ce que pourrait être un pas de température, elle peut être comprise entre 0.05 et 0.5°C, idéalement 0.1°C (à température ambiante constante).

**E140** : Si la différence est supérieure au seuil E, l'unité de traitement UC est amenée à corriger la valeur de $\alpha_i$ en appliquant la relation suivante :

$$\alpha_i = \alpha_{i-1} + 0.1\alpha_i$$

Puis, à partir de ce nouveau coefficient, l'unité de traitement peut reprendre la boucle de correction des seuils, à partir de l'étape E50.

Il faut noter que, lors d'un redémarrage, l'unité de traitement UC exécute le test sur X lors de l'étape E10 et si X est déjà à la valeur 1, l'unité de traitement UC passe automatiquement dans la boucle de réglage de $\alpha_i$.

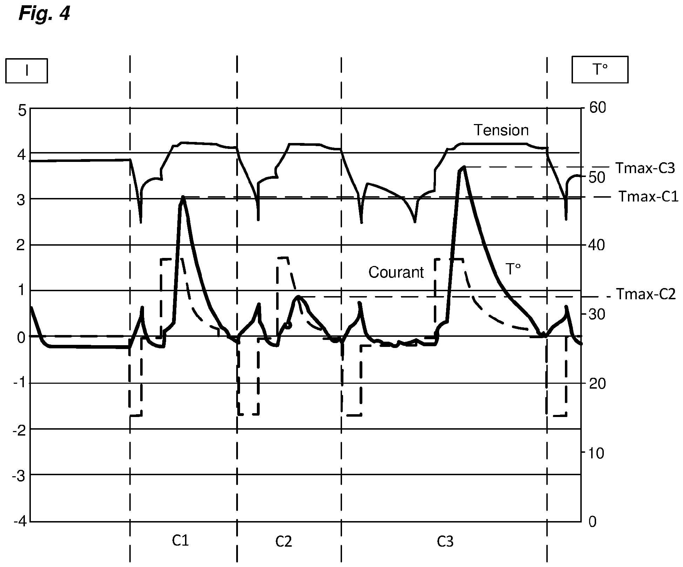

La figure 4 illustre, grâce à plusieurs courbes, le principe de fonctionnement de l'invention. On a ainsi :

- Sur le premier cycle C1, aucune adaptation des seuils n'est réalisée : la cellule surchauffe fortement (Tmax C1=48°C) ;
- Sur le second cycle C2, les coefficients A et B sont déterminés et appliqués par la méthode décrite, avec une forte baisse de l'échauffement lors de la phase à tension constante (Tmax_C2=32°C).
- Sur le troisième cycle C3, les seuils sont remis à l'état initial, avec comme conséquence l'amplification du phénomène de surchauffe et les risques associés pour l'utilisateur. (Tmax_C3=51°C).

L'invention présente ainsi de nombreux avantages. Elle permet notamment de s'adapter à l'état réel des électrodes pour :

- Améliorer la durée de vie de l'accumulateur,
- Limiter les risques de ruptures,
- Limiter la génération de chaleur.

## Revendications

1. Procédé de gestion d'un élément de stockage d'énergie électrique de type métal-ion qui comporte au moins une cellule (CELL), **caractérisé en ce que** lors d'un cycle de charge à tension constante, le procédé comporte les étapes suivantes :

   - Mesure de la température de la cellule pour obtenir plusieurs valeurs de température,
   - Détermination d'une valeur maximale de température (Tmax_i) parmi les valeurs de température obtenues,
   - En cas de détection d'un échauffement supérieur à un seuil d'échauffement ou d'un dépassement de seuil de ladite valeur maximale de température, correction d'une valeur seuil haute de tension de charge de la cellule et d'une valeur seuil basse de tension de fin de décharge de la cellule,
   - Détermination d'une première valeur de correction ($A_i$) à appliquer à la valeur seuil haute de tension et d'une deuxième valeur de correction ($B_i$) à appliquer à la valeur basse de tension, la première valeur de correction étant déterminée à partir de la somme d'un pas de correction ($\alpha_i$) et d'une valeur de correction mémorisée lors du cycle de charge précédent.

2. Procédé selon la revendication 1, **caractérisé en ce que** l'étape de détection d'un échauffement supérieur à un seuil d'échauffement est mise en oeuvre par détermination de la différence entre ladite valeur maximale de température (Tmax_i) déterminée et une valeur initiale de température (Tamb) mesurée au début du cycle de charge et par comparaison de ladite différence par rapport audit seuil d'échauffement.

3. Procédé selon la revendication 2, **caractérisé en ce que** ledit seuil d'échauffement correspond à la différence entre une valeur de température pré-mémorisée (Tobj1) et ladite valeur initiale de température (Tamb).

4. Procédé selon la revendication 1, **caractérisé en ce que** l'étape de détection du dépassement d'un seuil de ladite valeur maximale de température est mise en oeuvre par comparaison de ladite valeur maximale de température (Tmax_i) avec une valeur seuil de température (Tobj2).

5. Procédé selon la revendication 4, **caractérisé en ce qu'**il comporte une étape de correction dudit pas de correction ($\alpha_i$) lorsque la différence entre la valeur maximale de température mesurée lors d'un cycle de charge et la valeur maximale de température mesurée lors d'un cycle de charge précédent est supérieure à un seuil (E).

6. Système de gestion d'une batterie de type métal-ion comprenant au moins une cellule (CELL), ledit système étant **caractérisé en ce qu'**il comporte :

   - Des moyens de mesure de la température de chaque cellule,
   - Une unité de traitement et de commande configurée pour recevoir les données de température en provenance des moyens de mesure de la température et comprenant :

     ◦ Des moyens de détermination d'une valeur maximale de température (Tmax_i) parmi les valeurs de température obtenues,
     ◦ Des moyens de détection d'un échauffement supérieur à un seuil d'échauffement ou d'un dépassement de seuil de ladite valeur maximale de température et,
     ◦ Des moyens de correction d'une valeur seuil haute de tension de charge de la cellule et d'une valeur seuil basse de tension de fin de décharge de la cellule lors d'un dépassement dudit seuil d'échauffement ou de ladite valeur maximale de température.
     ◦ Des moyens de détermination d'une première valeur de correction ($A_i$) à appliquer à la valeur seuil haute de tension et d'une deuxième valeur de correction ($B_i$) à appliquer à la valeur seuil basse de tension, la première valeur de correction étant déterminée à partir de la somme d'un pas de correction ($\alpha_i$) et d'une valeur de correction mémorisée lors du cycle de charge précédent.

7. Système selon la revendication 6, **caractérisé en ce que** les moyens de détection d'un échauffement supérieur à un seuil d'échauffement comportent des moyens de détermination de la différence entre ladite valeur maximale de température (Tmax_i) déterminée et une valeur initiale de température (Tamb) mesurée au début du cycle de charge et des moyens de comparaison de ladite différence par rapport audit seuil d'échauffement.

8. Système selon la revendication 7, **caractérisé en ce que** ledit seuil d'échauffement correspond à la différence entre une valeur de température pré-mémorisée (Tobj1) et ladite valeur initiale de température (Tamb).

9. Système selon la revendication 6, **caractérisé en ce que** les moyens de détection du dépassement d'un seuil de ladite valeur maximale de température comportent des moyens de comparaison de ladite valeur maximale de température (Tmax_i) avec une valeur seuil de température (Tobj2).

10. Système selon la revendication 9, **caractérisé en ce que** l'unité de traitement comporte des moyens de correction dudit pas de correction ($\alpha_i$) lorsque la différence entre la valeur maximale de température mesurée lors d'un cycle de charge et la valeur maximale de température mesurée lors d'un cycle de charge précédent est supérieure à un seuil (E).

## Patentansprüche

1. Verfahren zur Verwaltung eines Speicherelements elektrischer Energie vom Typ Metall-Ionen, das mindestens eine Zelle (CELL) aufweist, **dadurch gekennzeichnet, dass** das Verfahren während eines Ladezyklus mit konstanter Spannung die folgenden Stufen aufweist:

   - Messung der Temperatur der Zelle, um mehrere Temperaturwerte zu erhalten,
   - Bestimmung eines maximalen Temperaturwerts (Tmax_i) unter den erhaltenen Temperaturwerten,
   - im Fall der Feststellung einer Erwärmung höher als eine Erwärmungsschwelle oder einer Schwellenüberschreitung des maximalen Temperaturwerts, Korrektur eines hohen Ladespannung-Schwellenwerts der Zelle und eines niedrigen Entladeschlussspannung-Schwellenwerts der Zelle,

- Bestimmung eines an den hohen Spannungsschwellenwert anzuwendenden ersten Korrekturwerts ($A_i$) und eines an den niedrigen Spannungswert anzuwendenden zweiten Korrekturwerts ($B_i$), wobei der erste Korrekturwert ausgehend von der Summe eines Korrekturschritts ($\alpha_i$) und eines im vorhergehenden Ladezyklus gespeicherten Korrekturwerts bestimmt wird.

2. Verfahren nach Anspruch 1, **dadurch gekennzeichnet, dass** die Stufe der Feststellung einer Erwärmung höher als eine Erwärmungsschwelle durch Bestimmung der Differenz zwischen dem bestimmten maximalen Temperaturwert ($Tmax\_i$) und einem zu Beginn des Ladezyklus gemessenen Temperaturausgangswert ($Tamb$) und durch Vergleich der Differenz mit der Erwärmungsschwelle durchgeführt wird.

3. Verfahren nach Anspruch 2, **dadurch gekennzeichnet, dass** die Erwärmungsschwelle der Differenz zwischen einem vorab gespeicherten Temperaturwert ($Tobj1$) und dem Temperaturausgangswert ($Tamb$) entspricht.

4. Verfahren nach Anspruch 1, **dadurch gekennzeichnet, dass** die Stufe der Feststellung des Überschreitens einer Schwelle des maximalen Temperaturwerts durch Vergleich des maximalen Temperaturwerts ($Tmax\_i$) mit einem Temperaturschwellenwert ($Tobj2$) durchgeführt wird.

5. Verfahren nach Anspruch 4, **dadurch gekennzeichnet, dass** es eine Korrekturstufe des Korrekturschritts ($\alpha_i$) aufweist, wenn die Differenz zwischen dem während eines Ladezyklus gemessenen maximalen Temperaturwert und dem während eines vorhergehenden Ladezyklus gemessenen maximalen Temperaturwert höher ist als eine Schwelle ($E$).

6. System zur Verwaltung einer Batterie vom Typ Metall-Ionen, die mindestens eine Zelle (CELL) enthält, wobei das System **dadurch gekennzeichnet ist, dass** es aufweist:

- Einrichtungen zur Messung der Temperatur jeder Zelle,
- eine Verarbeitungs- und Steuereinheit, die konfiguriert ist, die Temperaturdaten von Messeinrichtungen der Temperatur zu empfangen, und enthält:

    ○ Einrichtungen zur Bestimmung eines maximalen Temperaturwerts ($Tmax\_i$) unter den erhaltenen Temperaturwerten,
    ○ Einrichtungen zur Feststellung einer Erwärmung höher als eine Erwärmungsschwelle oder einer Schwellenüberschreitung des maximalen Temperaturwerts und
    ○ Einrichtungen zur Korrektur eines hohen Ladespannung-Schwellenwerts der Zelle und eines niedrigen Entladeschlussspannung-Schwellenwerts der Zelle bei einer Überschreitung der Erwärmungsschwelle oder des maximalen Temperaturwerts,
    ○ Einrichtungen zur Bestimmung eines an den hohen Spannungsschwellenwert anzuwendenden ersten Korrekturwerts ($A_i$) und eines an den niedrigen Spannungsschwellenwert anzuwendenden zweiten Korrekturwerts ($B_i$), wobei der erste Korrekturwert ausgehend von der Summe eines Korrekturschritts ($\alpha_i$) und eines beim vorhergehenden Ladezyklus gespeicherten Korrekturwerts bestimmt wird.

7. System nach Anspruch 6, **dadurch gekennzeichnet, dass** die Einrichtungen zur Feststellung einer Erwärmung höher als eine Erwärmungsschwelle Einrichtungen zur Bestimmung der Differenz zwischen dem bestimmten maximalen Temperaturwert ($Tmax\_i$) und einem zu Beginn des Ladezyklus gemessenen Temperaturausgangswert ($Tamb$) und Einrichtungen zum Vergleich der Differenz mit der Erwärmungsschwelle aufweisen.

8. System nach Anspruch 7, **dadurch gekennzeichnet, dass** die Erwärmungsschwelle der Differenz zwischen einem vorab gespeicherten Temperaturwert ($Tobj1$) und dem Temperaturausgangswert ($Tamb$) entspricht.

9. System nach Anspruch 6, **dadurch gekennzeichnet, dass** die Einrichtungen zur Feststellung des Überschreitens einer Schwelle des maximalen Temperaturwerts Einrichtungen zum Vergleich des maximalen Temperaturwerts ($Tmax\_i$) mit einem Temperaturschwellenwert ($Tobj2$) aufweisen.

10. System nach Anspruch 9, **dadurch gekennzeichnet, dass** die Verarbeitungseinheit Korrektureinrichtungen des Korrekturschritts ($\alpha_i$) aufweist, wenn die Differenz zwischen dem während eines Ladezyklus gemessenen maximalen Temperaturwert und dem während eines vorhergehenden Ladezyklus gemessenen maximalen Temperaturwert höher ist als eine Schwelle ($E$).

**Claims**

1. Method for managing an electrical energy storage element of metal-ion type which comprises at least one cell (CELL), **characterized in that**, in a constant voltage charging cycle, the method comprises the following steps:

   - measuring the temperature of the cell to obtain several temperature values,
   - determining a maximum temperature value (Tmax_i) from among the temperature values obtained,
   - in case of detection of a heating above a heating threshold or a threshold of said maximum temperature value being exceeded, correcting a high charging voltage threshold value of the cell and a low end-of-discharge voltage threshold value of the cell,
   - determining a first correction value ($A_i$) to be applied to the high voltage threshold value and a second correction value ($B_i$) to be applied to the low voltage value, the first correction value being determined from the sum of a correction pitch ($\alpha_i$) and of a correction value stored in the preceding charging cycle.

2. Method according to Claim 1, **characterized in that** the step of detecting a heating above a heating threshold is implemented by determining the difference between said determined maximum temperature value (Tmax_i) and an initial temperature value (Tamb) measured at the start of the charging cycle and by comparing said difference to said heating threshold.

3. Method according to Claim 2, **characterized in that** said heating threshold corresponds to the difference between a prestored temperature value (Tobj1) and said initial temperature value (Tamb).

4. Method according to Claim 1, **characterized in that** the step of detecting a threshold of said maximum temperature value being exceeded is implemented by comparing said maximum temperature value (Tmax_i) with a temperature threshold value (Tobj2).

5. Method according to Claim 4, **characterized in that** it comprises a step of correcting said correction pitch ($\alpha i$) when the difference between the maximum temperature value measured in a charging cycle and the maximum temperature value measured in a preceding charging cycle is above a threshold (E).

6. System for managing a battery of metal-ion type comprising at least one cell (CELL), said system being **characterized in that** it comprises:

   - means for measuring the temperature of each cell,
   - a processing and control unit configured to receive the temperature data originating from the temperature measurement means and comprising:

     ◦ means for determining a maximum temperature value (Tmax_i) from among the temperature values obtained,
     ◦ means for detecting a heating above a heating threshold and a threshold of said maximum temperature value being exceeded, and,
     ◦ means for correcting a high cell charging voltage threshold value and a low end-of-discharge voltage threshold value of the cell when said heating threshold or said maximum temperature value is exceeded,
     ◦ means for determining a first correction value ($A_i$) to be applied to the high voltage threshold value and a second correction value ($B_i$) to be applied to the low voltage threshold value, the first correction value being determined from the sum of a correction pitch ($\alpha_i$) and of a correction value stored in the preceding charging cycle.

7. System according to Claim 6, **characterized in that** the means for detecting a heating above a heating threshold comprise means for determining the difference between said determined maximum temperature value (Tmax_i) and an initial temperature value (Tamb) measured at the start of the charging cycle and means for comparing said difference with respect to said heating threshold.

8. System according to Claim 7, **characterized in that** said heating threshold corresponds to the difference between a prestored temperature value (Tobj1) and said initial temperature value (Tamb).

9. System according to Claim 6, **characterized in that** the means for detecting a threshold of said maximum temperature value being exceeded comprise means for comparing said maximum temperature value (Tmax_i) with a temperature threshold value (Tobj2).

10. System according to Claim 9, **characterized in that** the processing unit comprises means for correcting said correction pitch ($\alpha_i$) when the difference between the maximum temperature value measured in a charging cycle and the maximum temperature value measured in a preceding charging cycle is above a threshold (E).

**Fig. 1**

*Fig. 2*

Initialisation
i=0
$A_0=0$
$B_0=0$
$\alpha=0.05$
Vmax_init
Vmin_init
Tamb

E0

OFF

E1 — Phase de charge ?  — N — OFF — E2

Y

E3 — Mesure I, U, T°C

E4 — Tmax_i-Tamb>Tobj1-Tamb ?  — N

Y

E5 — i=i+1

E6 — Stop charge

E7 — $A_i=A_{i-1}+\alpha$
$B_i=A_i/2$

E8 — Vmax_i=Vmax_init-$A_i$
Vmin_i=Vmin_init+$B_i$

E9 — Redémarrage
charge

*Fig. 3*

Initialisation
i=0
X=0
$A_0=0$
$B_0=0$
$\alpha_0=0.05$
Vmax_init
Vmin_init — E00

E10

OFF

X=0 ? — N — Phase de charge ? — N — OFF — E110

E100

Y — E20

Phase de charge ? — N — OFF

E30 — Y

Mesure I, U, T°C — Y — Mesure I, U, T°C — E120

E40

N — Tmax_i>Tobj2 ? — Tmax_i-Tmax_i-1>E ? — N — E130

Y — Y

E50 — Stop charge — $\alpha_i=\alpha_{i-1}+0.1\alpha_i$ — E140

E60 — X=1
i=i+1

E70 — $A_i=A_{i-1}+\alpha_i$
$B_i=A_i/2$

E80 — Vmax_i=Vmax_init-$A_i$
Vmin_i=Vmin_init+$B_i$

E90 — Redémarrage
charge

*Fig. 4*

**EP 4 029 075 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013257382 A1